## Europäisches Patentamt

## European Patent Office

## Office européen des brevets

(19)

(11) Numéro de publication: **0 192 546**
**B1**

(12) # FASCICULE DE BREVET EUROPÉEN

(45) Date de publication du fascicule du brevet:
**31.08.88**

(51) Int. Cl.⁴: **B 60 T 13/14**

(21) Numéro de dépôt: **86400249.8**

(22) Date de dépôt: **06.02.86**

(54) **Dispositif d'assistance hydraulique.**

(30) Priorité: **20.02.85 FR 8502460**

(43) Date de publication de la demande:
**27.08.86 Bulletin 86/35**

(45) Mention de la délivrance du brevet:
**31.08.88 Bulletin 88/35**

(84) Etats contractants désignés:
**DE GB IT**

(56) Documents cité:
**EP-A-0 179 686**
**DE-A-2 608 979**
**DE-A-2 757 757**
**FR-A-2 051 589**
**FR-E-61 152**

(73) Titulaire: **BENDIX France, 126, rue de Stalingrad,
F-93700 Drancy (FR)**

(72) Inventeur: **Kervagoret, Gilbert, 5 Impasse
Nobleterre, F-95100 Argenteuil (FR)**

(74) Mandataire: **Timoney, Ian Charles Craig, Division
Technique Service Brevets Bendix Europe 126,
rue de Stalingrad, F-93700 Drancy (FR)**

EP 0 192 546 B1

## Description

La présente invention se rapporte aux dispositifs d'assistance hydraulique et plus particulièrement à un tel dispositif pour un circuit de freinage à fonctionnement mixte hydrodynamique (plus communément désigné sous l'appellation anglo-saxonne "full power") et hydrostatique.

On connaît du document EP-A-0 179 686 un dispositif d'assistance hydraulique du type dit "full power" qui correspond au préambule de la revendication 1 et qui est susceptible de fonctionner comme un maître-cylindre conventionnel, en mode hydrostatique, en cas de défaillance du circuit provenant de la source haute pression. Ce dispositif comprend une coupelle annulare qui sépare une premère chambre de pression de maître-cylindre d'une deuxième chambre de pression reliée aux freins du véhicule et susceptible d'être sélectivement reliée à la source haute pression. En cas de défaillance du circuit haute pression, lors d'une mise en oeuvre du dispositif, un piston, qui limite la première chambre, se déplace et comprime le fluide dans la première chambre, ce qui provoque un basculement de la coupelle et permet au fluide sous pression de passer et, mode hydrostatique vers les freins.

Malgré ses avantages évidents, ce système présente cependant de légers inconvénients en ce que les seuils d'effort peuvent se révéler trop élevés et que les fuites de distribution peuvent être également considérées comme excessives.

L'invention a donc pour objet de proposer un dispositif d'assistance hydraulique du type dit "full power" susceptible de fonctionner comme un maître-cylindre conventionnel en cas de défaillance du circuit haute pression, ayant des seuils d'effort réduits et des fuites de distribution limitées.

Pour ce faire, l'invention est caractérisé en ce que le joint d'étanchéité est monté coulissant dans l'alésage et sur la forrure et est déplaçable en direction du mouvement du premier moyen de piston par le premier moyen de piston quand les pressions hydrauliques dans la première et la deuxième chambres sont sensiblement égales, et en ce que le joint est relié au premier moyen de piston par un moyen de ressort.

D'autres caractéristiques et avantages de la présente invention ressortiront de la description suivante d'un mode de réalisation donné à titre illustratif, mais nullement limitatif, faite en relation avec les dessins annexés, sur lesquels :

- La Figure 1 est une vue en coupe longitudinale d'un dispositif d'assistance hydraulique selon l'invention ; et

- La Figure 2 est une vue partielle à grande échelle du dispositif de la Figure 1.

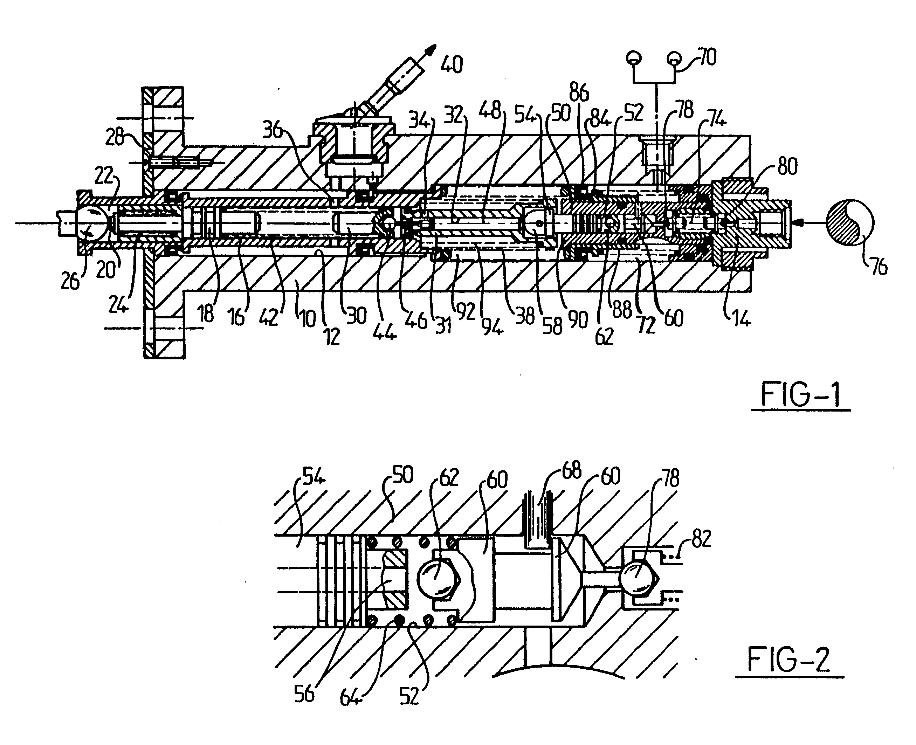

Comme représenté sur la Figure 1, le dispositif d'assistance hydraulique, dans l'exemple illustré un maître cylindre, comprend un boîtier 10 comportant un alésage principal étagé 12 obturé à une extrémité par un élément de fermeture 14.

Dans l'alésage 12 est monté coulissant un premier piston 16 en forme de manchon dans lequel est monté coulissant un deuxième piston 18. Le deuxième piston 18 comprend une tige de poussée 20 qui s'étend dans un logement 22 du manchon 16 et est reliée au manchon par un ressort 24. La forme du logement 22 permet, lors d'une mise en oeuvre du dispositif, un déplacement initial du deuxième piston 18 avant que la tête d'un poussoir 26, relié à la pédale de freinage (non représentée), ne vienne en appui contre le piston en forme de manchon 16.

Le premier piston 16 est retenu en butée arrière par une plaque 28 rapportée sur le boîtier 10. Dans le premier piston 16 est également monté coulissant un élément de poussée 30 et un poussoir 31 dans lequel sont formés un perçage longitudinal étagé 32 et une ouverture latérale 34 qui forment ensemble avec un orifice 36 dans le premier piston 16 un conduit entre une chambre de pression 38 et un réservoir basse pression 40 (non représenté). L'élément de poussée 30 est relié au deuxième piston 18 par un ressort 42. L'élément de poussée 30 comporte une bille 44 qui est susceptible de fermer un siège 46 à l'extrémité du poussoir 31 mais, dans la position de repos du dispositif, est maintenue dans sa position ouverte par une aiguille 48 montée coulissant dans le poussoir 31.

Dans l'alésage 12 est montée fixe une fourrure 50 qui comporte un alésage 52 dans lequel est monté coulissant un piston de commande 54 (voir la Figure 2). Le piston de commande 54 comporte un perçage longitudinal 56 qui est en communication hydraulique avec la chambre de pression 38 par l'intermédiaire d'un orifice transversal 58. le dispositif comprend, en plus, un élément de commande 60 monté coulissant dans l'alésage 52 et qui comporte une bille 62 susceptible de fermer le perçage 56. La bille 62 est, dans la position de repos illustrée du dispositif, maintenue dans sa position ouverte par un ressort 64 disposé entre le piston de commande 54 et l'élément de commande 60. L'élément de commande 60 cmoprend une collerette profilée 66 qui, dans la position de repos du dispositif vient en appui contre une goupilie creuse 68 qui relie l'alésage 52 ou circut de freinage 70 du véhicule par l'intermédiaire d'une chambre annulaire 72 délimitée intérieurement dans l'alésage 12 par la fourrure 50.

L'élément de fermeture 14 comporte un alésage 74 destiné à être relié à une source de fluide sous pression 76, et dans lequel sont montés deux clapets à billes antagonistes 78, 80 plaqués contre leurs sièges respectifs par un ressort 82.

Sur la fourrure 50 est montée coulissant une douille 84 qui comporte un joint annulaire 86 qui isole la chambre de pression 38 de la chambre annulaire 72. La douille 84 est normalement sollicitée, vers la gauche, en regardant les dessins, par un ressort 88 et vient en appui contre un épaulement radial 90 sur la fourrure 50. La douille 84 est reliée au premier piston 16 par l'intermédiaire d'un ressort 92, et un deuxième ressort 94 relie le poussoir 31 au premier piston 16.

Lors d'une mise en oeuvre du dispositif le poussoir 26 se déplace vers la droite (en regardant les Figures) et vient en appui contre la tige de poussée 20 provoquant le déplacement de cette dernière ainsi que, par l'intermédiaire du ressort 42, le déplacement de l'élément de poussée 30. Quand l'élément de poussée 30 se déplace, il provoque, par l'intermédiaire de l'aiguille 48, le déplacement du piston de commande 54. Pendant ce temps, le clapet à bille 44 reste ouvert à cause de l'action du ressort 94 qui déplace le poussoir 31 vers la droite. Le déplacement du piston de commande 54 provoque la fermeture du clapet 62, isolant la chambre de pression 38 de la chambre annulaire 72.

Si le déplacement du poussoir 26 continue, l'élément de commande 60 se déplace et ouvre la bille 78 et permet au fluide sous pression de passer par la goupille creuse 68 et la chambre 72 vers les freins 70 du véhicule. La pression dans la chambre 72 croît linéairement avec l'effort transmis par le ressort 42 jusqu'à ce que ta tête du poussoir 26 vienne en contact avec le premier piston 16 et ce dernier se met en mouvement et comprime le ressort 94 dont l'effort vient s'ajouter à celui du ressort 42 pour actionner le piston de commande 54. L'action conjuguée des ressorts 74 et 42 sur le piston de commande 54 pour commander l'ouverture de la bille 78 provoque ainsi la création, dans la chambre annulaire 71, d'une pression de freinage proportionnelle à la somme des efforts fournis au piston de commande diminués de l'effort du ressort 82 de sollicitation de la bille 78. Il s'en suit, la fourniture, dans le circuit de freinage 70, d'une pression de freinage qui, rapportée à la course pédale, présente une caractéristique non linéaire.

Lors d'un défreinage, il y a relâchement de l'effort sur le poussoir 26 qui permet au piston de commande 54 de revenir vers la gauche de l'élément de commande 60 qui vient en butée contre la goupille 68 et la bille 78 se ferme. La collerette profilée 66 a pour fonction d'amortir la montée en pression dans la chambre 72 du fait du jeu réduit entre la collerette et l'alésage 52. Un complément de déplacement du poussoir 26 provoque l'ouverture de la bille 62 permettant au fluide sous pression dans la chambre 72 de passer par le perçage 56, l'orifice 58 et le siège 46 vers le réservoir 40. Le faible jeu entre l'élément de poussée 30 et la surface intérieure du piston 16 sert à amortir la détente pour éviter les diverses vibrations hydrauliques.

Si l'effort au relâchement se stabilise, le clapet 62 se referme sous l'action des divers ressorts et crée une pression correspondante dans les freins du véhicule.

En cas de défaillance du circuit haute pression 76, le clapet à bille 80 se ferme, isolant la chambre 72 du circuit haute pression. Lors d'une mise en oeuvre du dispositif, le poussoir 31 vient en butée contre la fourrure 50; le clapet 44 se ferme, le piston de commande 54 coulisse vers la droite mains le clapet à bille 62 reste ouvert car la tare du ressort 64 est supérieure à celle du ressort 82. La chambre 38 devient chambre de maître cylindre hydrostatique, le déplacement du poussoir 26 provoquant le coulissement du piston 16 qui comprime le fluide dans la chambre 38. Le fluide sous pression passe de la chambre 38 aux freins 70 par l'orifice 58, le perçage 56 et la goupille creuse 68.

La pression du fluide dans la chambre 38 est égale à celle dans la chambre 72 et donc le joint annulaire 86 et la douille 84 sont libres de pouvoir coulisser. Ainsi, quand le piston 16 se déplace vers la droite, le ressort 92 provoque le coulissement de la douille 84 sans que le ressort 92 ne s'en trouve comprimé. L'effort de freinage à la pédale est ainsi réduit.

La taille réduite de la bille 62 assure la réduction des fuites internes, un tel clapet pouvant, à cause de sa forme, être parfaitement étanche, contrairement aux gros clapets côniques, proposés antérieurement qui sont, de plus, délicats à réaliser. De plus, les deux pistons concentriques 16, 18 et la forme des joints utilisés dans le dispositif assurent une réduction des seuils d'effort.

## Revendications

1. Dispositf d'assistance hydraulique, comprenant un boîtier (10) pourvu d'un alésage (12) dans lequel est monté coulissant un premier moyen de piston (16, 18) déplaçable sous l'effet de l'actionnement d'une pédale de freinage entre une première position permettant la communication d'une première chambre (72) reliée à un circuit de freinage (70) à un réservoir de basse pression (40), et isolant cette première chambre (72) d'une source de fluide haute pression (76), et une deuxième position isolant la première chambre (72) du réservoir basse pression (40) et la faisant communiquer avec la source haute pression (76), le dispositif comprenant de plus une deuxième chambre (38) formée dans le boîtier (10), le moyen de communication entre la première chambre (72) et le réservoir (40) comprenant un deuxième alésage (52) dans lequel est monté coulissant un deuxième piston (54, 60), comportant un alésage (56), le premier moyen de piston ayant un alésage dans lequel est monté coulissant un poussoir (31) qui relie le premier moyen de piston au deuxième piston (54, 60), et un moyen de clapet (62) susceptible de fermer le moyen de communication entre la première chambre (72) et le réservoir (40) sous l'effet du déplacement du premier moyen de piston, la première chambre (72) étant isolée de la deuxième chambre (38) par un joint d'étanchéité (86) entre ledit alésage (12) et une fourrure (50) montée fixe dans l'alésage (12) et formant avec ce dernier la première chambre (72), caractérisé en ce que ledit joint (86) est monté coulissant dans l'alésage (12) et sur la fourrure (50) et est déplaçable en direction du mouvement du premier moyen de piston (16, 18) par le premier moyen de piston (16, 18) quand les pressions hydrauliques dans la première et la deuxième chambres (72, 38) sont sensiblement égales, et en ce que le joint (86) est relié au premier moyen de piston (16, 18) par un moyen de ressort (92).

2. Dispositif selon la revendication 1 caractérisé en ce que le premier moyen de piston (16, 18) comprend un manchon (16) dans lequel sont montés coulissant un piston intérieur (18) et un élément de poussée (30), le poussoir (31) étant susceptible d'être actionné par l'élément de poussée (30) qui est relié au piston intérieur (18) par un moyen de ressort (42).

3. Dispositif selon l'une des revendications 1 ou 2 caractérisé en ce que le deuxième piston (54, 60) comprend un piston de commande (54) et un élément de commande (60).

## Patentansprüche

1. Hydraulischer Verstärker mit einem Gehäuse (10), das mit einer Bohrung (12) versehen ist, in der eine erste Kolbenanordnung (16, 18) unter der Wirkung eines Bremspedals gleitend verschiebbar ist zwischen einer ersten Stellung, in der eine an einem Bremskreis (70) angeschlossene erste Kammer (72) mit einem Niederdruckspeicher (40) verbunden ist und diese erste Kammer (72) von einer Hochdruckquelle (76) getrennt ist, und einer zweiten Stellung, in der die erste Kammer (72) von dem Niederdruckspeicher (40) getrennt und mit der Hochdruckquelle (76) verbunden ist, wobei der Verstärker ferner eine im Gehäuse (10) gebildete zweite Kammer (38) aufweist, die Verbindung zwischen der ersten Kammer (72) und dem Speicher (40) eine zweite Bohrung (52) aufweist, in der ein mit einer Bohrung (56) versehener zweiter Kolben (54, 60) gleitend gelagert ist, die erste Kolbenanordnung eine Bohrung hat, in der ein Stößel (31) gleitend gelagert und eine Ventilanordnung (62) angeordnet ist, von denen der Stößel die erste Kolbenanordnung mit dem zweiten Kolben (54, 60) verbindet und die Ventilanordnung unter der Wirkung einer Verschiebung der ersten Kolbenanordnung die Verbindung zwischen der ersten Kammer (72) und dem Speicher (40) schließt, und die erste Kammer (72) von der zweiten Kammer (38) durch eine Dichtung (86) zwischen der besagten Bohrung (12) und einer Buchse (50) getrennt ist, die in der Bohrung (12) fest angebracht ist und mit dieser die erste Kammer (72) bildet, dadurch gekennzeichnet, daß die Dichtung (86) in der Bohrung (12) und auf der Buchse (50) gleitend gelagert und in

Bewegungsrichtung der ersten Kolbenanordnung (16, 18) durch die erste Kolbenanordnung (16, 18) verschiebbar ist, wenn der hydraulische Druck in der ersten und zweiten Kammer (72, 38) im wesentlichen gleich ist, und daß die Dichtung (86) mit der ersten Kolbenanordnung (16, 18) durch eine Federanordnung (92) verbunden ist.

2. Verstärker nach Anspruch 1, dadurch gekennzeichnet, daß die erste Kolbenanordnung (16, 18) eine Hülse (16) aufweist, in der ein innerer Kolben (18) sowie ein Stößelglied (30) gleitend gelagert sind, wobei der Stößel (31) durch das Stößelglied (30) betätigbar ist, welches mit dem inneren Kolben (18) durch eine Federanordnung (42) verbunden ist.

3. Verstärker nach Anspruch 1 oder 2, dadurch gekennzeichnet, daß der zweite Kolben (54, 60) einen Steuerkolben (54) und ein Steuerglied (60) aufweist.

## Claims

1. Hydraulic assistance device, comprising a casing (10) provided with a bore (12) in which a first piston means (16, 18) is slidably mounted, the said piston means (16, 18) being capable of moving under the effect of the actuation of a brake pedal between a first position allowing communication between a first chamber (72) connected to a braking circuit (70) and a reservoir of low pressure (40), and isolating this first chamber (72) from a source of high pressure fluid (76), and a second position isolating the first chamber (72) from the low pressure reservoir (40) and causing it to communicate with the high pressure source (76), the device also incorporating a second chamber (38) formed in the casing (10), the means of communication between the first chamber (72) and the reservoir (40) comprising a second bore (52) in which a second piston (54, 60) is slidably mounted, this second piston (54, 60) incorporating a bore (56) the first piston means having a bore in which a plunger (31) is slidably mounted, the plunger (31) joining the first piston means to the second piston (54, 60), and a valve means (62) capable of closing the means of communication between the first chamber (72) and the reservoir (40) under the effect of the movement of the first piston means, the first chamber (72) being isolated from the second chamber (38) by a seal (86) between the said bore (12) and a sleeve (50) fixedly mounted in the bore (12) and forming with the latter the first chamber (72), characterized in that the said seal (86) is slidably mounted in the bore (12) and on the sleeve (50) and is movable in the direction of the movement of the first piston means (16, 18) by the first piston means (16, 18) when the hydraulic pressures in the first and second chambers (72, 38) are essentially equal, and in that the seal (86) is joined to the first piston means (16, 18) by a spring means (92).

2. Device according to Claim 1, characterized in that the first piston means (16, 18) comprises a sleeve (16) in which an inner piston (18) and a plunger component (30) are slidably mounted, the plunger (31) being capable of being actuated by the plunger component (30) which is joined to the inner piston (18) by a spring means (42).

3. Device according to either of Claims 1 and 2, characterized in that the second piston (54, 60) comprises a control piston (54) and a control component (60).

FIG-1

FIG-2

0 192 546